# EUROPÄISCHE PATENTANMELDUNG

(11) **EP 3 653 320 A1**
(43) Veröffentlichungstag der Anmeldung: **20.05.2020**
(21) Anmeldenummer: 18206811.4
(22) Anmeldetag: 16.11.2018
(51) Int. Cl.: B22F 3/10, B22F 5/00, B22F 3/105, B22F 7/04

(54) **VERFAHREN ZUM SINTERN EINES SINTERZEUGS**

(71) Anmelder: Siemens Aktiengesellschaft, 80333 München (DE)
(72) Erfinder: Buschbeck, Jörg, 90482 Nürnberg (DE); Rieger, Gotthard, 80636 München (DE); Schuh, Carsten, 85598 Baldham (DE); Soller, Thomas, 94469 Deggendorf (DE); Vollmer, Rolf, 36129 Gersfeld (DE)

(57) **Zusammenfassung**

Bei dem Verfahren zum Sintern eines Sinterzeugs mittels eines Sinterwerkzeugs wird zwischen Sinterzeug und Sinterwerkzeug eine Trennschicht herangezogen, welche zumindest eine nicht am Sinterwerkzeug anliegende glatte Oberfläche aufweist, an welcher das Sinterzeug angeordnet wird.

## Beschreibung

Die Erfindung betrifft ein Verfahren zum Sintern eines Sinterzeugs.

Zunehmend werden Magnetbleche für elektrische Maschinen mittels Schablonendrucks gedruckt. Dazu wird mit Metallpulver zunächst eine Druckpaste gebildet, welche mittels Schablonendrucktechnik zu einem Grünkörper in Gestalt einer Dickschicht verarbeitet wird. Anschließend wird mittels Entbinderns und Sinterns ein metallisches, strukturiertes Blech gefertigt.

Dieses neuartige Fertigungsverfahren stellt jedoch neue Herausforderungen an die einzelnen Fertigungsschritte. Insbesondere die Reproduzierbarkeit der Fertigung erfordert weitere Entwicklungsarbeit.

Es ist daher Aufgabe der Erfindung, ein verbessertes Verfahren zur Fertigung eines Sinterzeugs anzugeben, welches insbesondere eine verbesserte Reproduzierbarkeit der Fertigung erlaubt. Vorzugsweise soll das Verfahren zudem kostengünstig sein.

Diese Aufgabe der Erfindung wird mit einem Verfahren zur Sinterung eines Sinterzeugs mit den in Anspruch 1 angegebenen Merkmalen gelöst. Bevorzugte Weiterbildungen der Erfindung sind in den zugehörigen Unteransprüchen, der nachfolgenden Beschreibung und der Zeichnung angegeben.

Das erfindungsgemäße Verfahren ist ein Verfahren zum Sintern eines Sinterzeugs mittels eines Sinterwerkzeugs. Bei dem erfindungsgemäßen Verfahren wird zwischen Sinterzeug und Sinterwerkzeug mindestens eine Trennschicht herangezogen, welche zumindest eine zumindest bereichsweise nicht am Sinterwerkzeug anliegende glatte Oberfläche aufweist, wobei das Sinterzeug an dieser glatten Oberfläche angeordnet wird.

Unter einer glatten Oberfläche im Sinne dieser Erfindung ist vorzugsweise eine Oberfläche zu verstehen, welche eine geringere Oberflächenrauigkeit aufweist, als, vorzugsweise auf eine einheitliche Höhe, gestreutes, d.h. lediglich gestreutes und nicht gepresstes, Pulver, insbesondere eine geringere Oberflächenrauigkeit als gestreutes Aluminiumoxid-Pulver. Vorteilhaft ist erfindungsgemäß aufgrund der Trennlage mit der glatten Oberfläche die Reibung zwischen Sinterzeug und Trennlage gegenüber der Verwendung von geschüttetem Pulver als Trennschicht reduziert. Folglich ist somit auch die Reibung zwischen Sinterzeug und Sinterwerkzeug gegenüber bekannten Lösungen reduziert. Die erfindungsgemäß vorgesehene Trennlage ermöglicht daher eine homogene, ungestörte Schwindung im Verlauf der Sinterung. Die ungestörte Schwindung verbessert die Reproduzierbarkeit der Fertigung mittels des erfindungsgemäßen Verfahrens erheblich.

Besonders bevorzugt ist unter einer glatten Oberfläche im Sinne dieser Erfindung eine Oberfläche zu verstehen, welche eine geringere Oberflächenrauigkeit aufweist, als auf eine einheitliche Höhe gestreutes, aber nicht gepresstes, Pulver mit insbesondere sphärischen Partikeln mit einem Durchmesser von 20 Mikrometern, vorzugsweise 5 Mikrometern und idealerweise 2 Mikrometern. Alternativ und ebenfalls bevorzugt kann unter einer glatten Oberfläche eine Oberfläche mit einer Oberflächenrauigkeit zu verstehen sein, welche geringer ist, als bei einem auf eine einheitliche Höhe gestreuten, aber nicht gepressten, Pulver mit einer im Wesentlichen gaußförmigen oder poissonförmigen Verteilung von Partikeldurchmessern, wobei sich die Partikeldurchmesser in einem sich über zwei Standardabweichungen erstreckenden Intervall, welches von 2 Mikrometern bis 20 Mikrometern reicht, konzentrieren. Weiterhin alternativ und ebenfalls bevorzugt kann unter einer glatten Oberfläche eine Oberfläche mit einer Oberflächenrauigkeit zu verstehen sein, welche geringer ist, als bei einem auf eine einheitliche Höhe gestreuten, aber nicht gepressten, Pulver mit einer Gleichverteilung von Partikeldurchmessern, wobei die Partikeldurchmesser von 5 Mikrometern bis 20 Mikrometern, vorzugsweise von 2 Mikrometern bis 20 Mikrometern, reichen.

Weiterhin vorteilhaft lässt sich bei der erfindungsgemäßen Trennlage die Dicke und somit die mechanische Stabilität der Trennlage, ihre Rauigkeit sowie ihre Saugfähigkeit im Vergleich zu gestreutem Pulver frei wählen. Somit können die Lösungsmittelaufnahme aus der Druckpaste und damit die Steuerung der Trocknung und folglich die Kantensteilheit und somit die Präzision der gedruckten Strukturen in einem weiten Bereich geeignet eingestellt werden. Auch in dieser Hinsicht ist die Reproduzierbarkeit mittels des erfindungsgemäßen Verfahrens erhöht.

Mittels des erfindungsgemäßen Verfahrens kann also mit einer hohen Präzision und folglich äußerst reproduzierbar gefertigt werden. Insbesondere können auch die Trennlagen mit reproduzierbaren Eigenschaften gefertigt werden. Somit lässt sich die Fertigung mittels des erfindungsgemäßen Verfahrens auch in dieser Hinsicht reproduzierbarer gestalten.

Zweckmäßig ist bei dem Verfahren gemäß der Erfindung die Trennschicht zumindest bereichsweise plan und/oder eben. Im Falle planer oder ebener Trennschichten ist eine unbeeinflusste Schwindung im Verlauf der Sinterung auf einfache Weise sichergestellt. Geeignet weist bei dem erfindungsgemäßen Verfahren das Sinterwerkzeug eine Sinterauflage auf.

In einer Weiterbildung des erfindungsgemäßen Verfahrens ist die Trennschicht zumindest bereichsweise formstabil. Auf diese Weise kann die Trennschicht einfach gehandhabt und vorteilhaft zudem wiederverwendet werden. Dementsprechend ist der Bedarf an Trennschichten deutlich reduziert. Alternativ und ebenfalls bevorzugt wird die Trennschicht als Grünkörper eingelegt, wobei geeigneterweise während der Entbinderung infolge der Pyrolyse der organischen Bestandteile eine Trennschicht mit hoher Packungsdichte resultiert.

Vorteilhaft ist die Trennschicht chemisch inert. Unter einer chemisch inerten Trennschicht im Rahmen der vorliegenden Erfindung ist eine Trennschicht zu verstehen, welche bei den beim Sintern auftretenden Temperaturen gegenüber eisenbasierten Metallen und/oder Legierungen inert ist.

Vorzugsweise werden bei dem erfindungsgemäßen Verfahren mindestens zwei Trennschichten herangezogen, wobei das Sinterzeug zwischen diesen Trennschichten, vorzugsweise an je einer glatten Oberfläche dieser Trennschichten, angeordnet ist.

Bei dem erfindungsgemäßen Verfahren ist oder wird vorzugsweise die Trennschicht mittels einer Suspension und/oder Sprühens und/oder Aufwalzens und/oder Sieb- und/oder Schablonendrucks und/oder mittels Transferdrucks und/oder Aufrakelns mit anschließender Trocknung und/oder Plasma- und/oder Kaltgassprühens gefertigt. Alternativ oder zusätzlich und ebenfalls bevorzugt ist oder wird die Trennschicht mittels trockener Pulverschüttung und anschließenden Pressens und/oder mittels Aerosol-Deposition und/oder mittels Entbinderns und/oder Sinterns gefertigt.

Bevorzugt wird oder ist bei dem Verfahren gemäß der Erfindung die Trennschicht mittels Herstellung eines Schlickers und/oder Folienziehens und/oder Foliengießens, vorzugsweise mit anschließender Trocknung, und/oder mittels Keramikpapier, d.h. mittels in einer Papierfasermatrix befindlicher Keramikpartikel oder Keramikfasern, und/oder mittels Stanzens oder Schneidens, vorzugsweise mittels eines Lasers und/oder Messers, gebildet.

Bei dem erfindungsgemäßen Verfahren ist oder wird die Trennschicht vorzugsweise mit Magnesiumoxid und/oder Yttriumoxid und/oder Aluminiumoxid und/oder Bornitrid und/oder Yttrium-Aluminium-Granat und/oder Siliziumnitrid und/oder Siliziumcarbid und/oder Kohlenstoff, insbesondere Graphit und/oder Carbon-Nanotubes, und/oder einem oder mehreren sonstigen Refraktär-Werkstoffen gebildet.

Zweckmäßig wird oder ist die Trennschicht mit einem Pulver und/oder mit Platelets und/oder mit Whiskern und/oder mit Fasern gebildet.

Vorteilhaft ist oder wird bei dem Verfahren gemäß der Erfindung das Sinterwerkzeug mit Siliziumnitrid und/oder Siliziumcarbid und/oder porösem Aluminiumoxid und/oder porösem Magnesiumoxid und/oder Mullit und/oder faserverstärktem Komposit gebildet.

Bei dem erfindungsgemäßen Verfahren wird zweckmäßig auf dem Sinterzeug eine weitere Trennschicht angeordnet und auf der Trennschicht ein weiteres Sinterzeug angeordnet.

Besonders bevorzugt werden bei dem Verfahren gemäß der Erfindung die im vorangegangenen Absatz beschriebenen Verfahrensschritte ein- oder mehrfach wiederholt. Auf diese Weise kann das erfindungsgemäße Verfahren kaskadiert werden und somit ein Nutzen mehrerer Sinterzeuge gleichzeitig gefertigt werden. In dieser Weiterbildung der Erfindung wird somit ein hohes Maß an Prozessparallelisierung erreicht. In dieser Weiterbildung der Erfindung ist somit ein hoher Durchsatz und eine deutliche Kostenersparnis realisierbar.

Zweckmäßig werden dazu eine oder mehrere Trennschichten herangezogen, welche an zwei einander abgewandten Seiten je eine glatte Oberfläche aufweisen. Auf diese Weise kann eine ungehinderte Sinterschwindung auch im Nutzen an mehreren Bereichen oder sogar stets gewährleistet werden. Geeigneterweise wird bei dem erfindungsgemäßen Verfahren das Sinterzeug an zwei einander abgewandten Seiten an je einer Trennschicht angeordnet. Auf diese Weise ist ein Zutritt schädlicher, insbesondere oxidativ wirkender, Gase aus einer Atmosphäre eines Sinterofens deutlich reduziert, d.h. die Trennschichten schützen das Sinterzeug an dessen zwei Seiten und kapseln das Sinterzeug somit zumindest teilweise. Besonders bevorzugt wird für die Trennschicht in dieser Weiterbildung der Erfindung ein Getter-Material für Schadgase, insbesondere Sauerstoff-, Kohlenstoff-, Stickstoff- oder Schwefelhaltige Schadgase, herangezogen.

Geeignet wird bei dem erfindungsgemäßen Verfahren, insbesondere anschließend, entbindert und/oder gesintert.

Vorteilhaft wird bei dem erfindungsgemäßen Verfahren dann, wenn gesintert wird, das Sinterwerkzeug und/oder die Trennlage, insbesondere die glatte Oberfläche der Trennlage, in Vibration versetzt, indem insbesondere akustische Wellen in das Sinterwerkzeug eingekoppelt werden. Geeigneterweise umfassen dabei die akustischen Wellen zumindest Oberflächenwellen.

Geeigneterweise wird in dieser Weiterbildung der Erfindung eine akustische Wellenquelle, vorzugsweise ein Interdigital-Transducer, herangezogen, welche vibrationserregend an dem Sinterzeug und/oder dem Sinterwerkzeug und/oder der Trennschicht angeordnet wird oder ist.

Nachfolgend wird die Erfindung anhand eines in der Zeichnung dargestellten Ausführungsbeispiels näher erläutert. Es zeigen:
- Figur 1: eine Fertigungsanlage zur Ausführung des erfindungsgemäßen Verfahrens schematisch in einer perspektivischen Darstellung sowie
- Figur 2: einen erfindungsgemäß gesinterten Nutzen schematisch im Längsschnitt.

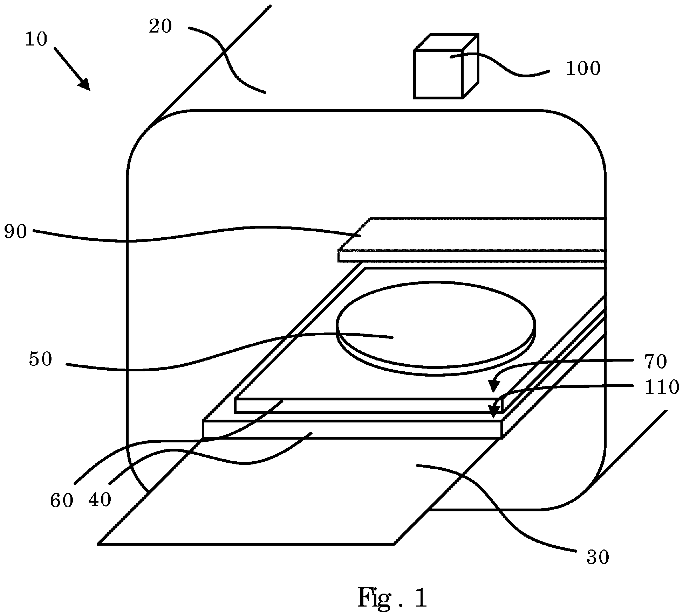

Die in Fig. 1 dargestellte Fertigungsanlage ist zur Ausführung des erfindungsgemäßen Verfahrens ausgebildet. Die Fertigungsanlage 10 umfasst in an sich bekannter Weise einen Sinterofen 20. Ferner umfasst die Fertigungsanlage 10 ein Transportband 30, welches zum Transport in den Sinterofen 20 hinein angeordnet und ausgebildet ist.

Auf dem Transportband 30 ist ein Sinterwerkzeug in Gestalt einer ebenen Sinterauflage 40 angeordnet. Auf die ebene Sinterauflage 40 wird mittels des erfindungsgemäßen Verfahrens Sinterzeug 50 abgeschieden und anschließend in an sich bekannter Weise im Sinterofen 20 gesintert.

Die Sinterauflage 40 ist mit Siliziumnitrid oder Siliziumcarbid oder porösem Aluminiumoxid oder porösem Magnesiumoxid oder Mullit gebildet, vorliegend als faserverstärktes Komposit.

Erfindungsgemäß wird das Sinterzeug 50 nicht unmittelbar auf der Sinterauflage 40 abgeschieden, sondern das Sinterzeug wird auf einer Trennschicht 60 abgeschieden, welche auf der Sinterauflage 40 zu liegen kommt und an ihrer der Sinterauflage 40 abgewandten Seite eine glatte Oberfläche 70 aufweist.

Im dargestellten Ausführungsbeispiel ist die Trennschicht 60 eine plane Trennschicht 60 in Gestalt eines Flachteils mit zueinander parallelen Flachseiten. Das Sinterzeug 50 wird dabei mittels Druckens auf die glatte Oberfläche 70 der Trennschicht 60 aufgebracht. Im dargestellten Ausführungsbeispiel wird das Sinterzeug 50 mittels Schablonendrucks im Siebdruckverfahren auf die Trennschicht 60 gedruckt.

Im dargestellten Ausführungsbeispiel ist die Trennschicht 60 mittels infolge Pressens verdichteten Aluminiumoxid-Pulvers gebildet, wobei die glatte Oberfläche 70 infolge des Pressens mit einem Werkzeug mit einer korrespondierenden glatten Oberfläche gebildet ist. Infolgedessen weist die glatte Oberfläche 70 eine weniger raue Oberfläche verglichen mit gestreutem, aber nicht anschließend gepresstem, Aluminiumoxid auf.

In weiteren, nicht eigens dargestellten Ausführungsbeispielen, welche im Übrigen dem dargestellten Ausführungsbeispiel entsprechen, ist die Trennschicht 60 nicht mittels Aluminiumoxid gebildet, sondern stattdessen kommt in diesen Ausführungsbeispielen pulverförmiges Magnesiumoxid oder Yttriumoxid oder Bornitrid oder Yttrium-Aluminium-Granat oder Siliziumnitrid oder Siliziumcarbid oder Kohlenstoff, insbesondere Graphit, zum Einsatz. Grundsätzlich kann auch ein Pulver von Carbon-Nanotubes herangezogen werden. In weiteren, nicht eigens dargestellten Ausführungsbeispielen, welche im Übrigen dem dargestellten Ausführungsbeispiel entsprechen, wird die Trennschicht 60 nicht mit pulverförmigem Material gebildet, sondern mit Material in Gestalt von Platelets und/oder Whiskern und/oder Fasern.

In weiteren, nicht eigens dargestellten Ausführungsbeispielen kann anstelle einer mittels Pulververdichtens ausgebildeten Trennschicht 60 auch eine Trennschicht herangezogen werden, welche mittels Suspension und nachfolgenden Sprühens oder Aufwalzens oder Siebdruckens oder Schablonendrucks oder mittels Transferdrucks oder Aufrakelns mit anschließender Trocknung oder Plasmasprühens oder Kaltgassprühens gebildet ist. In weiteren Ausführungsbeispielen welche dem dargestellten Ausführungsbeispiel entsprechen, kann die Trennschicht auch mittels Aerosol-Deposition oder mittels Entbinderns und Sinterns gefertigt werden.

Insbesondere kann in weiteren, nicht eigens in der Zeichnung gezeigten Ausführungsbeispielen eine formstabile Trennschicht gebildet und herangezogen werden, etwa mittels Herstellung eines Schlickers oder Folienziehens mit anschließender Trocknung oder mittels Keramikpapier, wobei die formstabile Trennschicht vor dem Heranziehen wie voranstehend beschrieben mit einem Laser oder einem Messer in die beabsichtigte Form und Größe geschnitten wird.

Nach dem Auftrag des Sinterzeugs 50 auf die Trennschicht 60 wird das Sinterzeug 50 im Sinterofen 20 gesintert.

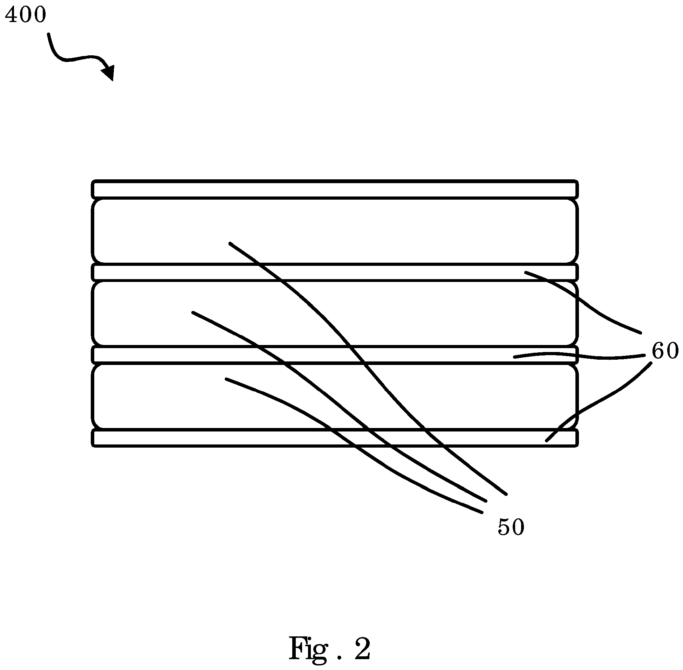

Im Falle formstabiler Trennschichten 60 kann das Drucken von Sinterzeug 50 wie in Fig. 2 gezeigt kaskadiert werden: So kann eine erste Trennschicht 60 vorgesehen sein, auf welche ein erstes Sinterzeug 50 gedruckt wird. Dann wird das erste Sinterzeug getrocknet und auf diese erste Lage getrockneten Sinterzeugs 50 eine weitere Trennschicht 60 aufgelegt. Dann kann diese weitere Trennschicht 60 gewissermaßen als Schablonendrucksubstrat herangezogen werden und anschließend auf diese weitere Trennschicht 60 eine weitere Lage Sinterzeug 50 aufgedruckt werden und so fort. Es können somit zugleich mehrere Lagen von Sinterzeug 50, getrennt durch Trennschichten 60, als Nutzen 400 gemeinsam in den Sinterofen 20 eingebracht werden und gemeinsam gesintert werden. Es wird eine hohe Prozessparallelisierung erreicht.

Alternativ können in weiteren, nicht eigens dargestellten Ausführungsbeispielen, welche den dargestellten Ausführungsbeispielen entsprechen, anstelle fertig vorproduzierter Trennschichten 60 auch gewissermaßen noch "grüne" Trennschichten bei dem erfindungsgemäßen Verfahren eingesetzt werden. In diesem Falle bilden im Verlauf des Entbinderns des gesamten Nutzens auch die "grünen" Trennschichten homogene Pulverlagen mit hoher Packungsdichte aus.

An der Sinterauflage 40 ist eine Anregungsquelle 90 zur Anregung akustischer Oberflächenwellen in der Trennschicht 60 angeordnet. Im dargestellten Ausführungsbeispiel ist die Anregungsquelle 90 beispielsweise ein Interdigitaltransducer, kann in weiteren, nicht dargestellten Ausführungsbeispielen jedoch auch als sonstiger Aktor realisiert sein. Die Anregungsquelle 90 ist an einer dem Sinterzeug 50 nahen Flachseite 110 der Sinterauflage 40 ausgebildet. Somit kann die Anregungsquelle 90 an der dem Sinterzeug nahen Flachseite 110 der Sinterauflage 40 akustische Oberflächenwellen ausbilden, sodass die Oberflächenwellen in die Trennschicht 60 einkoppeln und dort gleichfalls Oberflächenwellen anregen. Folglich kann eine Anhaftung von Trennschicht 60 und Sinterzeug 50 wirksam verhindert werden.

Die Anregungsquelle 90 arbeitet bei dem erfindungsgemäßen Verfahren nicht notwendigerweise kontinuierlich, sondern ist im dargestellten Ausführungsbeispiel mittels Funks mit einer Steuereinrichtung 100 signalverbunden, welche die Anregungsquelle 90 abhängig von der Temperatur des Sinterofens 20 steuert. Dabei werden die Oberflächenwellen intervallweise abgegeben.

Grundsätzlich können in den vorgenannten Ausführungsbeispielen nicht allein akustische Oberflächenwellen angeregt werden, sondern stattdessen kann die Sinterauflage 40 grundsätzlich auch mit akustischen Volumenwellen in Vibration versetzt werden.

In weiteren Ausführungsbeispielen, welche im Übrigen dem dargestellten Ausführungsbeispiel entsprechen, kann die Anregungsquelle 90 alternativ oder zusätzlich auch an der Trennschicht 60 und/oder dem Sinterzeug 50 angeordnet sein.

## Patentansprüche

1. Verfahren zum Sintern eines Sinterzeugs (50) mittels eines Sinterwerkzeugs (40), bei welchem zwischen Sinterzeug (50) und Sinterwerkzeug (40) eine Trennschicht (60) herangezogen wird, welche zumindest eine nicht am Sinterwerkzeug (40) anliegende glatte Oberfläche (70) aufweist, an welcher das Sinterzeug (50) angeordnet wird.

2. Verfahren nach dem vorhergehenden Anspruch, bei welchem die glatte Oberfläche (70) eine geringere Oberflächenrauigkeit aufweist als gestreutes Pulver, insbesondere Aluminiumoxid-Pulver.

3. Verfahren nach einem der vorhergehenden Ansprüche, bei welchem das Sinterwerkzeug (40) eine Sinterauflage aufweist.

4. Verfahren nach einem der vorhergehenden Ansprüche, bei welchem die Trennschicht (60) zumindest bereichsweise plan und/oder eben ist.

5. Verfahren nach einem der vorhergehenden Ansprüche, bei welchem die Trennschicht (60) zumindest bereichsweise formstabil und/oder chemisch inert ist.

6. Verfahren nach einem der vorhergehenden Ansprüche, bei welchem die Trennschicht (60) mittels einer Suspension und/oder Sprühens und/oder Aufwalzens und/oder Sieb- und/oder Schablonendrucks und/oder mittels Transferdrucks und/oder Aufrakelns mit anschließender Trocknung und/oder Plasma- und/oder Kaltgassprühens gefertigt wird oder ist und/oder mittels trockener Pulverschüttung und anschließenden Pressens und/oder mittels Aerosol-Deposition und/oder mittels Entbinderns und/oder Sinterns gefertigt wird oder ist.

7. Verfahren nach einem der vorhergehenden Ansprüche, bei welchem die Trennschicht (60) mittels Herstellung eines Schlickers und/oder Folienziehens und/oder Foliengießens, vorzugsweise mit anschließender Trockung, und/oder mittels Keramikpapier und/oder mittels Stanzens oder Schneidens, vorzugsweise mittels eines Lasers und/oder Messers, gebildet wird oder ist.

8. Verfahren nach einem der vorhergehenden Ansprüche, bei welchem die Trennschicht (60) mit Magnesiumoxid und/oder Yttriumoxid und/oder Aluminiumoxid und/oder Bornitrid und/oder Yttrium-Aluminium-Granat und/oder Siliziumnitrid und/oder Siliziumcarbid und/oder Kohlenstoff, insbesondere Graphit und/oder Carbon-Nanotubes, gebildet wird oder ist.

9. Verfahren nach einem der vorhergehenden Ansprüche, bei welchem das Sinterwerkzeug (40) mit Siliziumnitrid und/oder Siliziumcarbid und/oder porösem Aluminiumoxid und/oder porösem Magnesiumoxid und/oder Mullit und/oder faserverstärktem Komposit gebildet ist.

10. Verfahren nach einem der vorhergehenden Ansprüche, bei welchem auf dem Sinterzeug (50) eine weitere Trennschicht (60) angeordnet wird und auf der Trennschicht (60) ein weiteres Sinterzeug (50) angeordnet wird.

11. Verfahren nach einem dem vorhergehenden Anspruch, bei welchem die Verfahrensschritte des vorhergehenden Anspruchs ein- oder mehrfach wiederholt werden.

12. Verfahren nach einem der vorhergehenden Ansprüche, bei welchem, insbesondere anschließend, entbindert und/oder gesintert wird.

13. Verfahren nach einem der vorhergehenden Ansprüche, bei welchem dann, wenn gesintert wird, das Sinterwerkzeug (40) und/oder die Trennschicht (60), insbesondere die glatte Oberfläche der Trennschicht (60), in Vibration versetzt wird, indem insbesondere akustische Wellen in das Sinterwerkzeug (40) eingekoppelt werden.

14. Verfahren nach einem der vorhergehenden Ansprüche, bei welchem die akustischen Wellen zumindest Oberflächenwellen umfassen.

15. Verfahren nach einem der vorhergehenden Ansprüche, bei welchem eine akustische Wellenquelle (90), vorzugsweise ein Interdigital-Transducer, herangezogen wird, welcher vibrationserregend an dem Sinterwerkzeug (40) und/oder der Trennschicht (60) und/oder an dem Sinterzeug angeordnet wird.
